# EUROPÄISCHE PATENTANMELDUNG

(11) **EP 1 020 272 A2**
(43) Veröffentlichungstag der Anmeldung: **19.07.2000**
(21) Anmeldenummer: 00100091.8
(22) Anmeldetag: 07.01.2000
(51) Int. Cl.: B29B 7/76, B01F 5/04

(54) **Vorrichtung zum Verarbeiten und/oder Herstellen von Mehrkomponentengemischen**

(30) Priorität: 16.01.1999 DE 19901545
(71) Anmelder: EDF Polymer-Applikation Maschinenfabrik GmbH, 6912 Hörbranz (AT)
(72) Erfinder: Fetz, Dietmar, 6890 Lustenau (AT); Hausbichler, Hannes, 6900 Bregenz (AT); Baldauf, Günter, 6914 Hohenweiler (AT)
(74) Vertreter: Hennicke, Ernst Rüdiger,Dipl.-Ing.

(57) **Zusammenfassung**

Bei einer Vorrichtung zum Verarbeiten und/oder Herstellen von Mehrkomponentengemischen in einem statischen, weder einen Rührer noch eine Schußeinrichtung aufweisenden Mischkopf werden Ausgangskomponenten A, B eines Mehrkomponentengemischs C über Pumpen 5, 5' und Dosierventile 4, 4' dem Mischkopf 20 zugeführt. Der Austrag aus dem Mischkopf 20 und Auftrag des Mehrkomponentengemisches C z.B. als Dichtung 11 auf den Applikationsteil 1 erfolgt durch den Auslaß 21. Um nach Schließen der Dosierventile 4, 4' ein Ausbluten des Gemischs aus dem Auslaß 21 zu verhindern, weist der Mischkopf eine schaltbare Entlastungseinrichtung 40 auf, mit der das im Mischkopf 20 zur Verfügung stehende Volumen veränderbar ist.

## Beschreibung

Die Erfindung betrifft eine Vorrichtung zum Verarbeiten und/oder Herstellen von Mehrkomponentengemischen, insbesondere von Kunststoffgemischen aus dünn- bis zähflüssigen Kunststoffkomponenten, gemäß dem Oberbegriff des Anspruchs 1.

Vorrichtungen zum Verarbeiten und/oder Herstellen von Mehrkomponentengemischen weisen im allgemeinen einen Mischkopf auf. Bei einer Gruppe von Mischköpfen ist ein Rührer vorgesehen, der sich axial durch den Mischkopf bis in seine Mischkammer hinein erstreckt und zum Vermischen des Gemisches bzw. von dessen Komponenten dient. Häufig ist der Rührer mittels einer Antriebseinheit axial verschieblich angeordnet, um den Auslaß des Mischkopfes freizugeben bzw. zu verschließen. Derartige Vorrichtungen mit Rührer haben sich in der Praxis als überaus erfolgreich erwiesen, da der Rührer seiner Doppelfunktion als Rührelement einerseits und Verschlußorgan andererseits ausgesprochen zuverlässig gerecht wird.

Die Erfindung hingegen betrifft Vorrichtungen mit statischen Mischköpfen, also Mischköpfen, die weder einen Rührer aufweisen noch ein Verschlußorgan besitzen, das unmittelbar auf den Auslaß des Mischkopfes einwirkt.

Vorrichtungen der gattungsgemäßen Art dienen zur Verarbeitung von reaktiven Kunststoff-Komponenten. Ein wesentliches Einsatzgebiet ist die Herstellung von in sich geschlossenen Dichtungen, die unmittelbar (in situ) an einem Applikationsteil wie ein Ventildeckel oder Gehäuseverschlußdeckel angespritzt werden.

Bei den statischen Mischköpfen werden hierzu die Ausgangskomponenten über Einlässe und Zuführkanäle einer Mischkammer zugeführt und dort vermischt. Um eine gleichmäßige Vermischung zu erzielen, können innerhalb der Mischkammer und/oder in deren Außenwand Leitkörper wie z.B. Lamellen vorgesehen sein, die einen Widerstand für das von den Einlässen zu dem Auslaß fließende Gemisch bilden. Um das im Mischkopf gemischte Gemisch auf das Applikationsteil aufzutragen, werden die Ausgangskomponenten kontinuierlich weiter eingespritzt. Der Druck beim Einspritzen muß also relativ hoch gewählt werden, um ein Fließen der vergleichsweise zähflüssigen Komponenten aufrechtzuerhalten und den durch die Leitkörper aufgebrachten zusätzlichen Widerstand zu überwinden. Sobald die Dichtung am Applikationsteil mit dem Mischkopf vollständig aufgebracht wurde, werden an den Einlässen angeordnete Dosierventile geschaltet, so daß die Einlässe verschlossen sind und kein Ausgangsmaterial mehr in den Hohlraum im Mischkopf eintritt.

Bei den statischen Mischköpfen tritt regelmäßig das Problem auf, daß trotz des Schließens der Einlässe das Gemisch unkontrolliert aus dem Auslaß austritt und auf das Applikationsteil tropft. Dies führt zu einer erheblichen Qualitätsminderung der aufgebrachten Dichtung bzw. zur Verschmutzung der Applikationsteile, so daß diese teilweise unbrauchbar sind bzw. nachbearbeitet werden müssen.

Der Erfindung liegt daher die Aufgabe zugrunde, dieses als Ausbluten bezeichnete Nachlaufen von Kunststoffgemisch wirksam zu verhindern.

Gelöst wird dieses Problem mit der in Anspruch 1 angegebenen Erfindung. Erfindungsgemäß ist eine schaltbare Entlastungseinrichtung vorgesehen, mit der das Volumen, welches im Mischkopf für das Gemisch bzw. die Komponenten zur Verfügung steht, veränderbar ist. Ursächlich für das unkontrollierte Nachdrücken der Kunststoffkomponente bzw. des Kunststoffes ist nämlich der Überdruck, der sich wegen der rheologischen Eigenschaften des Kunststoffgemischs und der ggf. vorhandenen Leitkörper aufbaut. Da bei den herkömmlichen statischen Mischköpfen das Volumen innerhalb des Mischkopfes konstant ist, kann der Druck nur dadurch abgebaut werden, daß Material austritt. Diesem wird erfindungsgemäß dadurch entgegengetreten, daß mit der schaltbaren Entlastungseinrichtung das im Hohlraum zur Verfügung stehende Volumen zur Druckentlastung vergrößert wird. Von Vorteil ist auch, daß bei der erfindungsgemäßen Vorrichtung die für das Aufspritzen der Dichtung im Produktionsprozeß vorgesehene Taktzeit nicht verlängert werden muß.

Die Betätigung, also das Schalten der Entlastungseinrichtung, ist vorzugsweise mit der Betätigung der Dosierventile gekoppelt, so daß gleichzeitig oder unmittelbar nach dem Schließen der Dosierventile die Entlastungseinrichtung geschaltet wird. Parallel zu der schlagartigen Unterbrechung der weiteren Kunststoffkomponentenzufuhr und damit eines kontrollierten Auftragens von Kunststoffgemisch findet dann innerhalb des Mischkopf schlagartig ein Abbau des Überdrucks statt, so daß der zuvor geschilderte Druckaufbau kompensiert und mithin die Ursache des unkontrollierten Nachlaufens beseitigt wird.

Eine günstige Anordnung ergibt sich, wenn der Auslaß an einem insbesondere unteren Ende des Mischkopfes in Durchflußrichtung nach der Mischkammer und die Entlastungseinrichtung an dem gegenüberliegenden Ende des Mischkopfes angeordnet ist, vorzugsweise nahe des Einlasses, damit die Entlastungseinrichtung in einem Bereich innerhalb des statischen Mischkopfes angeordnet ist, in dem bei bzw. vor der Vermischung die maximalen Drücke auftreten. Durch das Positionieren der Entlastungseinrichtung näherungsweise unmittelbar am Einspritzpunkt des oder der Dosierventile wird die Druckentlastung also lokal an solchen Bereichen durchgeführt, an denen im Betrieb die maximalen Drücke auftreten.

Bei einer bevorzugten Ausführungsform weist die Entlastungseinrichtung einen Verdrängungskörper auf. Dieser kann bei einer Ausgestaltung der Erfindung während des Auftragsvorgangs an einer beliebigen Stelle in den vorhandenen Hohlraum eintauchen; da dies aber unter Umständen zu einer Erhöhung des Strömungswiderstandes führt, weist die Einrichtung bei einer besonders bevorzugten Ausführungsform einen in den Hohlraum mündenden Zusatzhohlraum auf, in dem der Verdrängungskörper axial hin- und herbewegbar ist. Das der Druckentlastung dienende zusätzliche Volumen hängt dann von den Abmaßen des Zusatzhohlraumes und des Verdrängungskörpers sowie dem Verschiebeweg des Verdrängungskörpers ab. Eine für den Strömungswiderstand und die Druckentlastung insgesamt günstige Anordnung ergibt sich, wenn Verdrängungskörper, Mischkammer und Auslaß axial zueinander ausgerichtet sind.

Bei der Druckentlastung sollte dafür Sorge getragen werden, daß kein Sauerstoff in die Mischkammer eintritt. Um dies auch bei einem Schaltfehler zu verhindern, kann der maximale Verschiebeweg des Verdrängungskörpers von Anschlägen begrenzt sein. Um das Entlastungsvolumen beeinflussen zu können, ist der Bewegungsweg des Verdrängungskörpers vorzugsweise einstellbar. Die Entlastungseinrichtung kann dann sowohl bei Mischköpfen mit großem Volumen bzw. großem Mischrohr als auch bei Mischköpfen mit kleinem Volumen bzw. kleinem Mischrohr optimal eingesetzt werden.

Für einen einfachen Aufbau der Entlastungseinrichtung ist es vorteilhaft, wenn der Verdrängungskörper mit dem Kolben einer Kolben/Zylindereinheit gekoppelt ist. Der Kolben kann dann mit einer Druckfeder vorgespannt sein und auf geeignete Weise, beispielsweise pneumatisch betätigt werden. Der Vorteil hierbei ist, daß dasselbe Schaltmedium für die Dosierventile und die Entlastungseinrichtung verwendet werden kann.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert wird. Es zeigt:
- Fig. 1: schematisch die erfindungsgemäße Vorrichtung im Einsatz;
- Fig. 2: einen Längsschnitt durch den Mischkopf einer erfindungsgemäßen Vorrichtung.

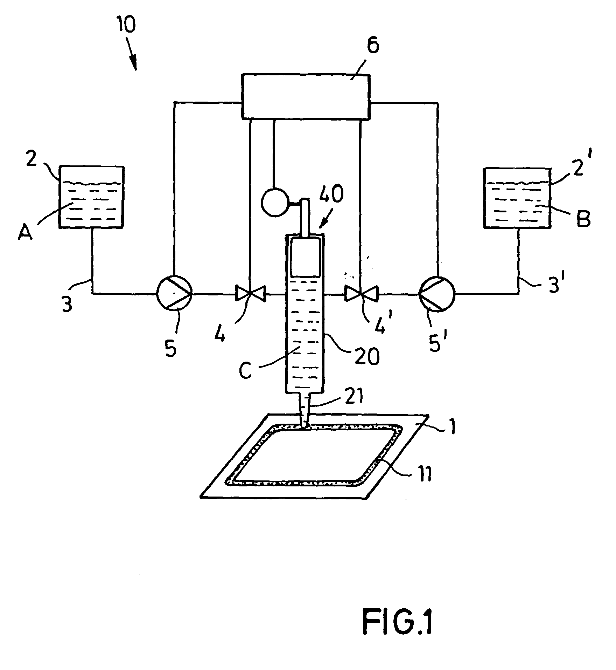

In Fig. 1 sind schematisch die Bestandteile einer insgesamt mit 10 bezeichneten Vorrichtung zum Herstellen und Auftragen eines Kunststoffgemisches auf ein Applikationsteil 1 gezeigt. Die Ausgangskomponenten A und B für das Kunststoffgemisch werden aus Speicherbehältern 2, 2' über Zuführleitungen 3, 3' einem Mischkopf 20 zugeführt. Den Leitungen 3, 3' sind Dosierventile 4, 4' zugeordnet, mittels denen der unter Druck erfolgende Zustrom der Kunststoffkomponenten A, B wahlweise unterbrochen werden kann. Der Mischkopf 20 weist einen mit einer Düse versehenen Auslaß 21 auf, mit dem ein in sich geschlossener Dichtungsstreifen 11 auf das Applikationsteil 1 aufgetragen wird. Während des Auftragens des Dichtungsstreifens 11 werden die Kunststoffkomponenten A, B kontinuierlich mittels Pumpen 5, 5' und über die Dosierventile 4, 4' unter Druck in den Mischkopf 20 eingespritzt. Sobald der Dichtungsstreifen 11 geschlossen ist, werden die Dosierventile 4, 4' mittels einer Schalteinrichtung 6 schlagartig geschlossen. Gleichzeitig wird eine insgesamt mit 40 bezeichnete Entlastungseinrichtung geschaltet, mit der das im Mischkopf 20 für das vermischte Kunststoffgemisch C zur Verfügung stehende Volumen verändert werden kann.

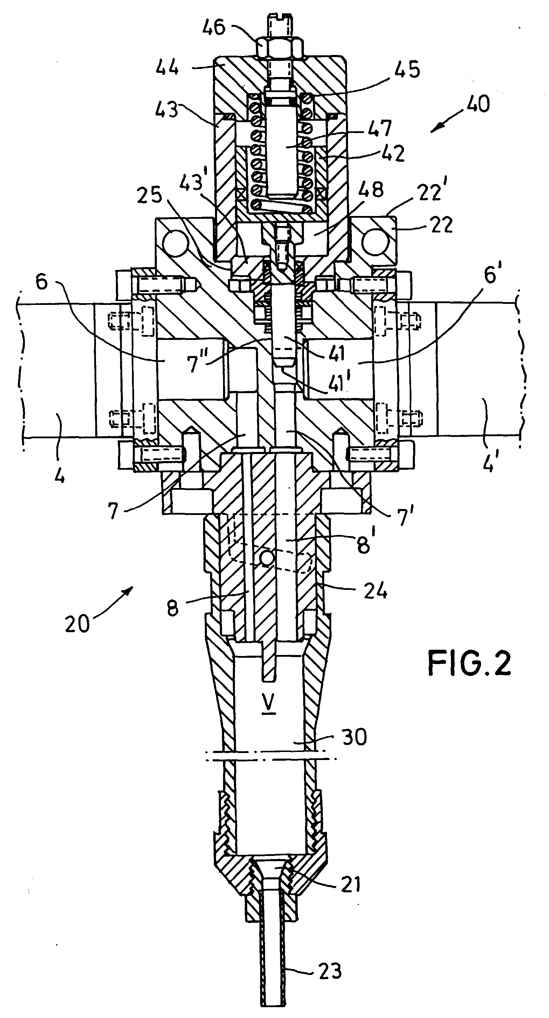

Der Aufbau des Mischkopfes 20 und der oben an dem Mischkopf 20 befestigten Entlastungseinrichtung 40 ist in Fig. 2 gezeigt. Die Dosierventile 4, 4' sind an einem mehrteiligen Mischkopfgehäuse 22 angeschraubt. Das Dosierventil 4 ist einem Einlaß 6 für die Kunststoffkomponente A, das Dosierventil 4' einem zweiten Einlaß 6' für die Kunststoffkomponenten B zugeordnet. Es versteht sich daß weitere Einlässe und Dosierventile vorhanden sein können, wenn das Kunststoffgemisch aus mehr als zwei Komponenten gebildet wird. Die als Bohrungen ausgeführten Einlässe 6, 6' liegen einander gegenüber, sind aber nicht miteinander verbunden. Beide gehen in senkrecht hierzu ausgebildete Zuflußkanäle 7, 7' über, um die Kunststoffkomponenten A, B (Fig. 1) einer Mischkammer 30 zuzuführen. In der Mischkammer 30 ist weder ein Rührer noch ein Verschlußorgan oder Schußzylinder zum Verschließen der Düse 23 am Auslaß 21 der Mischkammer 30 vorhanden; es handelt sich hier demgemäß um einen statischen Mischkopf.

Zwischen den Zuführkanälen 7, 7' und der Mischkammer 30 ist eine Proportionalitätsstufe 24 mit Zuführkanälen 8, 8' angeordnet, die einenends in die Zuführkanäle 7, 7', anderenends in die Mischkammer 30 münden. Während die Zuführkanäle 7, 7' im Mischkopfgehäuse 22 denselben Durchmesser haben, sind die Durchmesser der Zuführkanäle 8, 8' unterschiedlich, um das häufig stöchiometrische Mischungsverhältnis der Kunststoffkomponenten einstellen zu können. Es versteht sich, daß die Proportionalitätsstufe 24 auch weggelassen werden kann bzw. die Zuführkanäle 8, 8' andere als die dargestellten oder beide denselben Durchmesser haben können, falls das zu mischende Kunststoffgemisch ein anderes Mischungsverhältnis ihrer Komponenten erfordert. In der Mischkammer 30 können nicht gezeigte Leitprofile wie Lamellen vorgesehen sein, um die Durchmischung der Komponenten zu verbessern.

Die erfindungsgemäße Neuerung an dem Mischkopf 20 ist die oben angeordnete Entlastungseinrichtung 40. Der Zuführkanal 7' endet nicht in der Bohrung des Einlasses 6', sondern ist als durchgehende Bohrung 7'' bis zur Oberseite 22' des Mischkopfgehäuses 22 ausgeführt. In dieser Oberseite 22' ist ein mehrstufiger Anschluß 25 ausgebildet, mit dem die Entlastungseinrichtung 40 fest und druckdicht verschraubt ist.

Bei den aus dem Stand der Technik bekannten Mischköpfen ist das für die Kunststoffkomponenten A, B bzw. das Kunststoffgemisch C zur Verfügung stehende, von den Einlässen 6, 6' den Zuführkanälen 7, 7', 8, 8' und der Mischkammer 30 im Hohlraum des Mischkopfes vorhandene Volumen konstant. Mit der erfindungsgemäßen Entlastungsvorrichtung 40 kann dieses Volumen kontrolliert verändert werden. Hierzu ragt ein stangenförmiger Verdrängungskörper 41 in den sich senkrecht erstreckenden Bohrungsfortsatz 7'' des Zuführkanales 7' hinein. Der Verdrängungskörper 41 ist mit einem Kolben 42 gekoppelt, der innerhalb eines Zylinders 43 geführt ist. Kolben 42 und Zylinder 43 bilden eine Kolben/Zylindereinheit, die vorzugsweise ebenso wie die Dosierventile pneumatisch betätigbar ist, so daß dasselbe Schaltmedium für die Dosierventile 4, 4' und die Entlastungseinrichtung 40 verwendet werden kann. Der Kolben 42 der Kolben/Zylindereinheit kann beidseitig, also sowohl von der unteren Zylinderkammer 48 als auch von der entsprechend oberen Zylinderkammer her, über nicht gezeigte Zuführkanäle mit dem Schaltmedium beaufschlagt werden, wie dies an sich aus dem Stand der Technik bekannt ist.

Zwischen einem den Zylinder 43 druckdicht verschließenden Zylinderdeckel 44 und dem Kolben 42 ist eine Druckfeder 45 angeordnet, um den Verdrängungskörper 41 gegen den im Volumen V des Mischkopfes 20 vorhandenen, auf die Stirnseite 41' des Verdrängungskörpers 41 einwirkenden Druck vorzuspannen. Die Bewegung des Kolbens 42 und damit auch des Verdrängungskörpers 41 ist durch einen einstellbaren Anschlag 47 nach oben und durch die untere Zylinderwand 43' nach unten begrenzt. Die Einstellung des oberen Anschlags erfolgt mit einer Fixierschraube 46.

Das durch eine Bewegung des Verdrängungskörpers 41 erzeugbare zusatzvolumen entsteht in dem Bohrungsfortsatz 7'' des Zuführkanals 7'. Es ist damit nahe des Einlasses 6' angeordnet und liegt relativ zum Auslaß 21 am entgegengesetzten Ende des Mischkopfes. Auslaßdüse 23, Mischkammer 30, die Zuführkanäle 7, 7', 8, 8' und die Bewegungsrichtung des Verdrängungskörpers 41 sind achsparallel angeordnet, damit sich die Druckentlastung innerhalb des Volumens V schlagartig linear ausbreiten kann. Die Entlastungseinrichtung 40 ist als austauschbare Einheit ausgeführt, wobei der Zusatzhohlraum hier vollständig im Gehäuse 22 des Mischkopfs 20 vorgesehen ist.

Beim Auftragen einer Dichtung 11 auf ein Applikationsteil 1 (Fig. 1) finden im Mischkopf 20 und in der Entlastungseinrichtung 40 folgende Vorgänge statt: Die Kunststoff komponenten A, B strömen über die geöffneten Dosierventile 4, 4' in die Einlässe 6, 6' und über die Zuführkanäle 7, 7', 8, 8' in die Mischkammer 30, wo sie homogen vermischt werden und über die Düse 23 auf das Applikationsteil 1 aufgebracht werden. Sobald die Dichtung 11 vollständig aufgetragen wurde, werden die Dosierventile 4, 4' geschlossen. In die Einlässe 6, 6' tritt kein Material mehr ein. Gleichzeitig wird die untere Zylinderkammer 48 mit Druck beaufschlagt, so daß der Verdrängungskörper 41 axial nach oben bewegt wird und das Zusatzvolumen im Bohrungsfortsatz 7'' des Zuführkanals oberhalb des Einlasses 6' freigibt. Hierdurch wird der Überdruck im Kunststoffgemisch, das sich im gesamten Volumen V des Hohlraums befindet, schlagartig abgebaut.

Die Erfindung ist nicht auf das dargestellte und beschriebene Ausführungsbeispiel beschränkt. Die Anordnung und Ausgestaltung der Entlastungseinrichtung kann auch auf andere Weise als mit einem Verdrängungskörper erfolgen und an einer anderen Stelle, ggf. auch innerhalb der Dosierventile oder der Mischkammer, angeordnet sein, ohne den Schutzbereich der Erfindung zu verlassen.

## Patentansprüche

1. Vorrichtung zum Verarbeiten und/oder Herstellen von Mehrkomponentengemischen, insbesondere von Kunststoffgemischen aus dünn- bis zähflüssigen Kunststoffkomponenten,
mit einem statischen Mischkopf, der mindestens einen Einlaß für das Gemisch oder dessen Komponenten und einen Auslaß für das Gemisch aufweist, wobei Einlaß und Auslaß über einen aus Kanälen und einer Mischkammer gebildeten Hohlraum miteinander verbunden sind, sowie
mit einem jedem Einlaß zugeordneten, schaltbaren Dosierventil zum wahlweisen Unterbrechen der Komponenten-oder Gemischzufuhr in den Hohlraum,
**gekennzeichnet durch** eine schaltbare Entlastungseinrichtung (40), mit der das für das Gemisch bzw. die Komponente im Hohlraum zur Verfügung stehende Volumen (V) veränderbar ist.

2. Vorrichtung nach Anspruch 1, **dadurch gekennzeichnet, daß** die Dosierventile (4, 4') mit der Entlastungseinrichtung (40) derart gekoppelt sind, daß gleichzeitig oder unmittelbar nach dem Schließen der Dosierventile (4, 4') die Entlastungseinrichtung (40) schaltbar ist.

3. Vorrichtung nach Anspruch 1 oder 2, **dadurch gekennzeichnet, daß** der Auslaß (21) an einem insbesondere unteren Ende des Mischkopfes (20) und die Entlastungseinrichtung (40) an dem gegenüberliegenden Ende des Mischkopfes angeordnet ist.

4. Vorrichtung nach einem der Ansprüche 1 bis 3, **dadurch gekennzeichnet, daß** die Entlastungseinrichtung (40) nahe eines Einlasses (6, 6') angeordnet ist.

5. Vorrichtung nach einem der Ansprüche 1 bis 4, **dadurch** **gekennzeichnet, daß** die Entlastungseinrichtung (40) einen Verdrängungskörper (41) aufweist.

6. Vorrichtung nach Anspruch 5, **dadurch gekennzeichnet, daß** die Entlastungseinrichtung (40) einen in den Hohlraum mündenden Zusatzhohlraum (7'') umfaßt, in dem der Verdrängungskörper axial hin- und herbwegbar ist.

7. Vorrichtung nach Anspruch 5 oder 6, **dadurch gekennzeichnet, daß** Verdrängungskörper (41), Mischkammer (30) und Auslaß (21) axial zueinander ausgerichtet sind.

8. Vorrichtung nach einem der Ansprüche 5 bis 7, **dadurch gekennzeichnet, daß** der maximale Bewegungsweg des Verdrängungskörpers (41) von Anschlägen (43', 47) begrenzt ist.

9. Vorrichtung nach einem der Ansprüche 5 bis 8, **dadurch gekennzeichnet, daß** der Bewegungsweg des Verdrängungskörpers (41) einstellbar ist, wobei vorzugsweise der Anschlag (47) mittels Fixierschraube einstellbar ist.

10. Vorrichtung nach einem der Ansprüche 5 bis 9, **dadurch gekennzeichnet, daß** der Verdrängungskörper (41) mit dem Kolben (42) einer Kolben/Zylindereinheit (42, 43) gekoppelt ist.

11. Vorrichtung nach Anspruch 10, **dadurch gekennzeichnet, daß** der Kolben (42) der Kolben/Zylindereinheit (42, 43) mit einer Druckfeder (45) vorgespannt ist.

12. Vorrichtung nach Anspruch 10 oder 11, **dadurch gekennzeichnet, daß** die Kolben/Zylindereinheit (42, 43) pneumatisch betätigbar ist.

13. Vorrichtung nach einem der Ansprüche 10 bis 12, **dadurch gekennzeichnet, daß** der Verdrängungskörper (41) als axiale Verlängerung des Kolbens (42) ausgebildet ist.

14. Vorrichtung nach einem der Ansprüche 9 bis 13, **dadurch gekennzeichnet, daß** Kolben/Zylindereinheit (42, 43) und Verdrängungskörper (41) eine Einheit bilden, die derart an dem Mischkopfgehäuse (22) befestigbar ist, daß der Verdrängungskörper in den im Mischkopf (20) ausgebildeten Zusatzhohlraum (7'') eintaucht.

15. Vorrichtung nach einem der Ansprüche 1 bis 14, **dadurch gekennzeichnet, daß** in der Mischkammer (30) unbewegliche Strömungsleitkörper angeordnet sind.

16. Vorrichtung nach einem der Ansprüche 1 bis 15, **dadurch gekennzeichnet, daß** die Entlastungseinrichtung (40) lösbar an dem Mischkopf (20) befestigt ist.
